# EUROPEAN PATENT APPLICATION

(11) **EP 4 379 764 A1**
(43) Date of publication of application: **05.06.2024**
(21) Application number: 23213178.9
(22) Date of filing: 29.11.2023
(51) Int. Cl.: H01H 13/06

(54) **WATERPROOF KEYBOARD WITH FLEXIBLE KEYBOARD CIRCUIT AND RELATED METHODS**

(30) Priority: 29.11.2022 US 202263385304 P
(71) Applicant: Seal Shield, LLC, Jacksonville, FL 32205 (US)
(72) Inventor: Kuruppumullage,, Nadun, Jacksonville, 32205 (US); Davis,, Christian, Jacksonville, 32205 (US)
(74) Representative: Sach, Greg Robert

(57) **Abstract**

A waterproof keyboard includes a housing having keyboard buttons, and a flexible keyboard circuit carried within the housing. The flexible keyboard circuit includes a first polymer layer, and an electrically conductive material layer on the first polymer layer to define switches and connections. The switches are aligned with the keyboard buttons. The flexible keyboard circuit also includes a second polymer layer over the first polymer layer and the electrically conductive material layer, and an adhesive layer between the first polymer layer and the second polymer layer and defining sealed air chambers. Subsets of the switches are respectively within the sealed air chambers. The waterproof keyboard also includes a controller to be coupled to the flexible keyboard circuit.

## Description

### Related Application

This application is based upon prior filed copending Application No. 63/385,304 filed November 29, 2022, the entire subject matter of which is incorporated herein by reference in its entirety.

### Technical Field

The present disclosure relates to the field of input devices, and, more particularly, to a physical keyboard and related methods.

### Background

Conventional human interface devices (HIDs), including keyboards, calculators, data entry terminals, remotes, cellular and wired telephones provide little or no protection against liquids, including, but not limited to, water, cleaning fluids, disinfectants, antimicrobial solutions and solvents, or to solid particles, such as dirt and dust. In fact, occasional or prolonged exposure to or submersion in liquids may cause conventional HIDs to malfunction, and conventional HIDs are almost certainly destroyed by submersion in such liquids. These liquids drain around the key system and enter a conventional HID, coming into contact with the electrical circuitry, for example, the printed circuit board (PCB) or other electrical components of the HID and shorting out the circuits therein.

The ability of HIDs to resist liquids and solid particles is important for a number of reasons, including the fact that users spill liquids thereon or inadvertently submerse the HID by, for example, dropping it in water. Moreover, particularly in the healthcare industry with respect to HIDs and particularly keyboards, such HID should be disinfected and washed in a variety of ways, including, but not limited to, in an automatic dishwasher. Existing keyboards generally fail to withstand exposure to or submersion in antimicrobial solutions, abrasive automatic dishwashing cleaners, cleaning agents, bodily fluids, gels and other liquids. These keyboards should also be able to withstand the temperature and pressure extremes encountered in an automatic dishwasher or through submersion.

To understand the complexity of the problem, it is important to realize that the keys of an HID, and particularly the keys of a keyboard, serve several functions. Such keys operate primarily to make switch contact, but it is also desirable that they provide the user with a snap-like tactile sensation or feedback, hereafter referred to as the tactile feedback signal, whereby the user is assured of successful switch operation. This tactile feedback signal is provided in three ways: (1) by providing a desirable amount of resistance to key actuation; (2) through "over-travel" of the keys; and (3) through a bottoming of the key at the end of the key stroke. The switches within a keyboard or other HID employ a wide variety of devices, including, but not limited to, spring loaded assemblies and deformable dome spring elements, to provide this tactile feedback signal.

Healthcare industry studies have shown that keyboards are a primary source of cross contamination infections. A University of Arizona study found that the average keyboard contains 400 times more microbial bacteria than the average toilet seat. Studies have further shown that up to 250 of hospital keyboards harbor the antibiotic resistant bacteria, methicillin-resistant staphylococcus aureus (MRSA), which causes life threatening staphylococcus infections. Further, given the increasing prevalence of "super-bugs", "super-flus", particularly against the backdrop of global health scares, such as Avian (bird) flu, the United States, as well as the rest of the world, is facing an infection problem of growing proportions.

### Summary

Generally, a waterproof keyboard (e.g., a non-vented waterproof keyboard) includes a housing having a plurality of keyboard buttons, and a flexible keyboard circuit carried within the housing. The flexible keyboard circuit includes a first polymer layer, and at least one electrically conductive material layer on the first polymer layer to define a plurality of switches and connections therebetween. The plurality of switches is aligned with the plurality of keyboard buttons. The flexible keyboard circuit also includes a second polymer layer over the first polymer layer and the at least one electrically conductive material layer, and an adhesive layer between the first polymer layer and the second polymer layer and defining a plurality of sealed air chambers. Subsets of the plurality of switches are respectively within the plurality of sealed air chambers. The waterproof keyboard also includes a controller to be coupled to the flexible keyboard circuit.

In some embodiments, the flexible keyboard circuit may include a plurality of visual indicators carried by the first and second polymer layers and being coupled to the at least one electrically conductive material layer. The controller may be configured to activate at least one visual indicator once a set time period has expired.

Also, the housing may include a first internal cavity receiving the flexible keyboard circuit, and a second internal cavity within the first internal cavity. The controller may be carried within the second internal cavity. The second internal cavity may be sealed from the first internal cavity. The flexible keyboard circuit may include a connector strip extending from the first internal cavity to the second internal cavity and coupled to the controller.

The housing may include an external connector port coupled to the controller. The waterproof keyboard may include a connection wire coupled between a computing device and the external connector port. For example, each of the first polymer layer and the second polymer layer may include biaxially-oriented polyethylene terephthalate, and the adhesive layer may include an adhesive tape layer.

Another aspect is directed to a method of making a waterproof keyboard. The method includes providing a housing with a plurality of keyboard buttons, forming a flexible keyboard circuit, and positioning the flexible keyboard circuit within the housing. The flexible keyboard circuit includes a first polymer layer, and at least one electrically conductive material layer on the first polymer layer to define a plurality of switches and connections therebetween. The plurality of switches is aligned with the plurality of keyboard buttons. The flexible keyboard circuit also includes a second polymer layer over the first polymer layer and the at least one electrically conductive material layer, and an adhesive layer between the first polymer layer and the second polymer layer and defining a plurality of sealed air chambers. Subsets of the plurality of switches are respectively within the plurality of sealed air chambers. The method comprises coupling a controller within the housing and to the flexible keyboard circuit.

Another aspect is directed to a method of making a waterproof keyboard. The method includes forming a plurality of alignment holes in a periphery of each of a first polymer layer, at least one electrically conductive material layer, a second polymer layer, and an adhesive layer. The method includes aligning the first polymer layer, the at least one electrically conductive material layer, the second polymer layer, and the adhesive layer using the plurality of alignment holes to form a stack of layers. The at least one electrically conductive material layer is on the first polymer layer to define a plurality of switches and connections therebetween, and the second polymer layer is over the first polymer layer and the at least one electrically conductive material layer. The adhesive layer is between the first polymer layer and the second polymer layer. The method further includes laminating the stack of layers, and segmenting the stack of layers to define a flexible keyboard circuit. The adhesive layer defines a plurality of sealed air chambers, and subsets of the plurality of switches are respectively within the plurality of sealed air chambers. The method comprises positioning the flexible keyboard circuit within a housing, the plurality of switches being aligned with a plurality of keyboard buttons in the housing, and coupling a controller within the housing to the flexible keyboard circuit.

### Brief Description of the Drawings

FIG. 1 is a schematic diagram of a computing system, according to the present disclosure.
FIGS. 2A & 2B are perspective views of a first example embodiment of a waterproof keyboard from the computing system of FIG. 1 with the connection wire and without the connection wire, respectively.
FIGS. 3A & 3B are perspective views of the waterproof keyboard from FIGS. 2A-2B with the connection wire and without the connection wire, respectively.
FIG. 4 is a schematic diagram of a flexible keyboard circuit from the waterproof keyboard from FIGS. 2A-2B.
FIG. 5 is a cross-sectional view of a keyboard button and a switch from the waterproof keyboard from FIGS. 2A-2B.
FIG. 6 is a bottom plan view of the waterproof keyboard from FIGS. 2A-2B with a portion of the housing removed.
FIG. 7 is a perspective view of a connection wire from the waterproof keyboard of FIGS. 2A-2B.
FIGS. 8-9 are enlarged images of the flexible keyboard circuit from the waterproof keyboard from FIGS. 2A-2B.
FIGS. 10-11 are schematic diagrams of layers of the flexible keyboard circuit from the waterproof keyboard from FIGS. 2A-2B.
FIG. 12 is a perspective view of a second example embodiment of a waterproof keyboard from the computing system of FIG. 1 without the connection wire.
FIG. 13 is another perspective view of the waterproof keyboard from FIG. 12.
FIG. 14 is a top plan view of a mounting arm from the waterproof keyboard from FIG. 12.
FIG. 15 is a flowchart of a method for making the waterproof keyboard, according to the present disclosure.

### Detailed Description

The present disclosure will now be described more fully hereinafter with reference to the accompanying drawings, in which several embodiments of the invention are shown. This present disclosure may, however, be embodied in many different forms and should not be construed as limited to the embodiments set forth herein. Rather, these embodiments are provided so that this disclosure will be thorough and complete, and will fully convey the scope of the present disclosure to those skilled in the art. Like numbers refer to like elements throughout, and base 100 reference numerals are used to indicate similar elements in alternative embodiments.

In existing waterproof keyboard approaches, the keyboard circuitry is partially sealed within a membrane, but the membrane includes one or more external vents to permit air movement to accommodate keystrokes. In particular, in approaches using rubber domes, the dome must compress to activate the keyboard circuit, pushing air within the internal chamber through the one or more external vents. The problem with this approach is that immersing the waterproof keyboard in a liquid, such as a cleaner liquid, may cause liquid ingress into the one or more external vents. After repeated cleaning cycles, the liquid ingress may reach the keyboard circuitry and render the waterproof keyboard inoperable.

In typical approaches, the external venting is needed due to pressure balance between outside atmosphere pressure and internal air pressure. This may be crucial for existing designs as the membranes are sealed only on edges of two layers (i.e., at the perimeter of the membrane). Without the external venting, the existing membrane designs may inflate like a balloon if there is a pressure difference between internal air chamber and external atmosphere.

In existing approaches, there is only one air chamber where all key contact switches exist in. The membrane is only sealed on perimeter. In the solution disclosed herein, there are multiple air chambers in which only a few key contact switches are included. The air chambers in the disclosed solution are smaller in volume; thus, they will not create ballooning effect. Therefore, the disclosed solution does not require external vents.

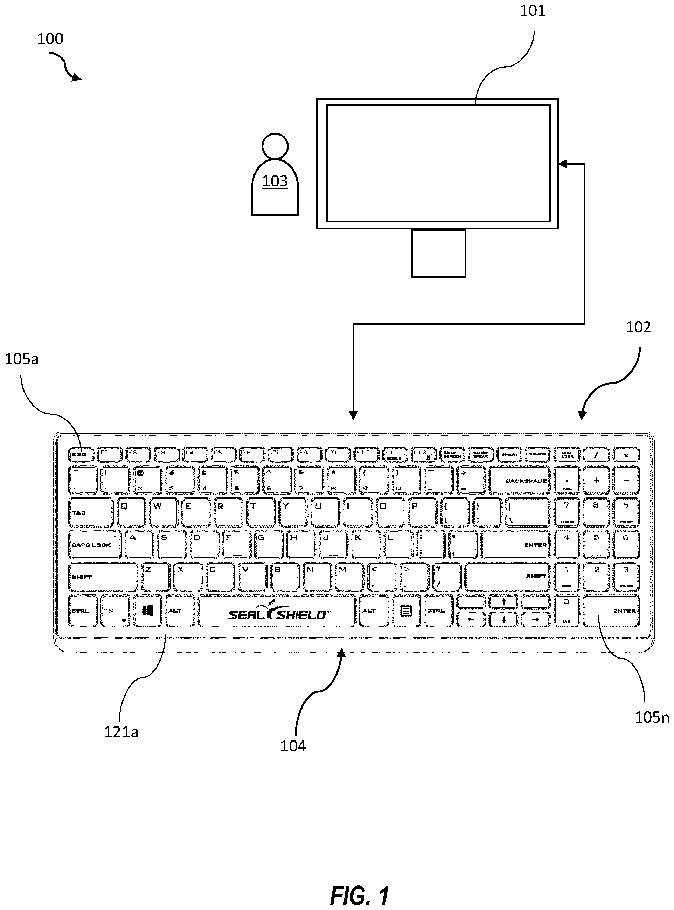

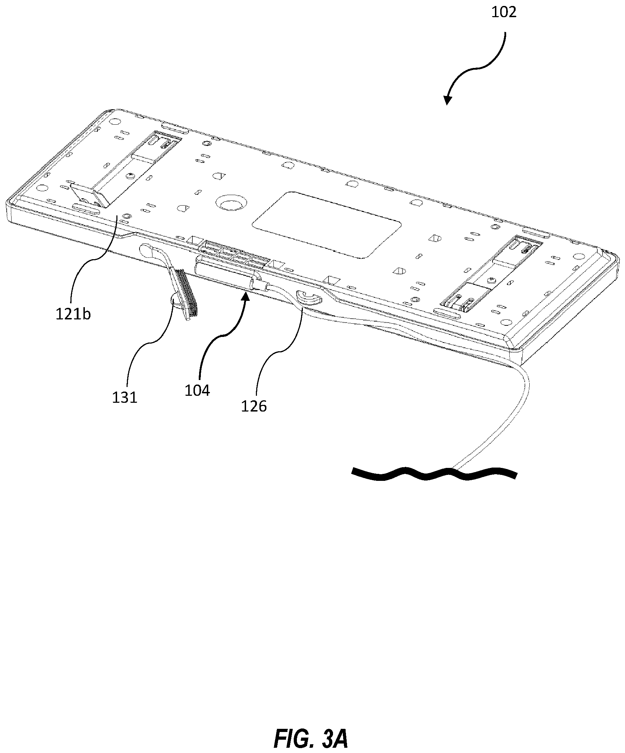

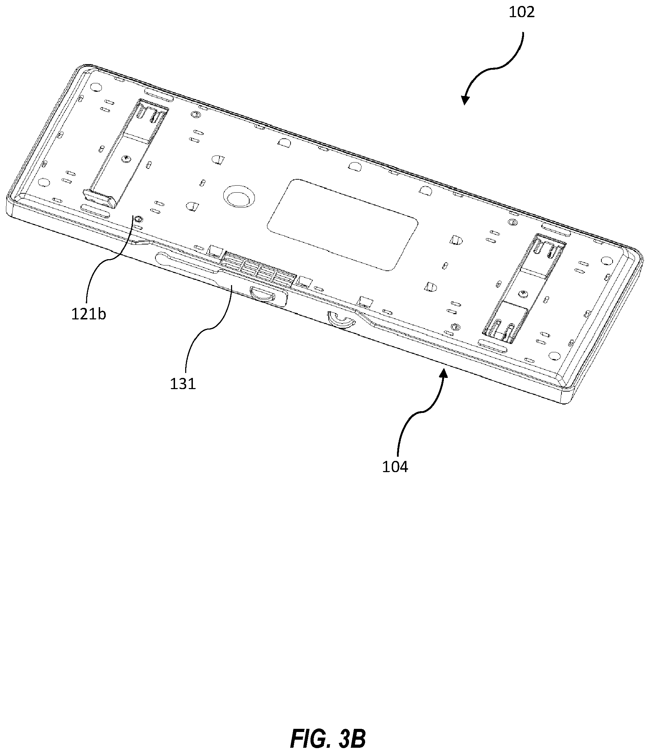

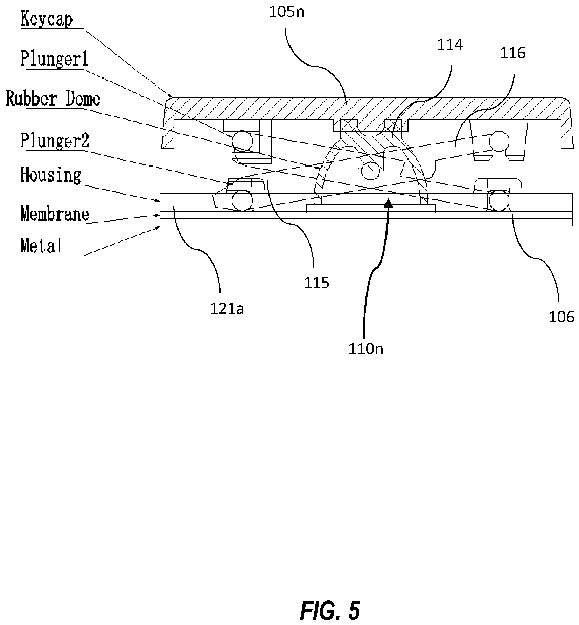

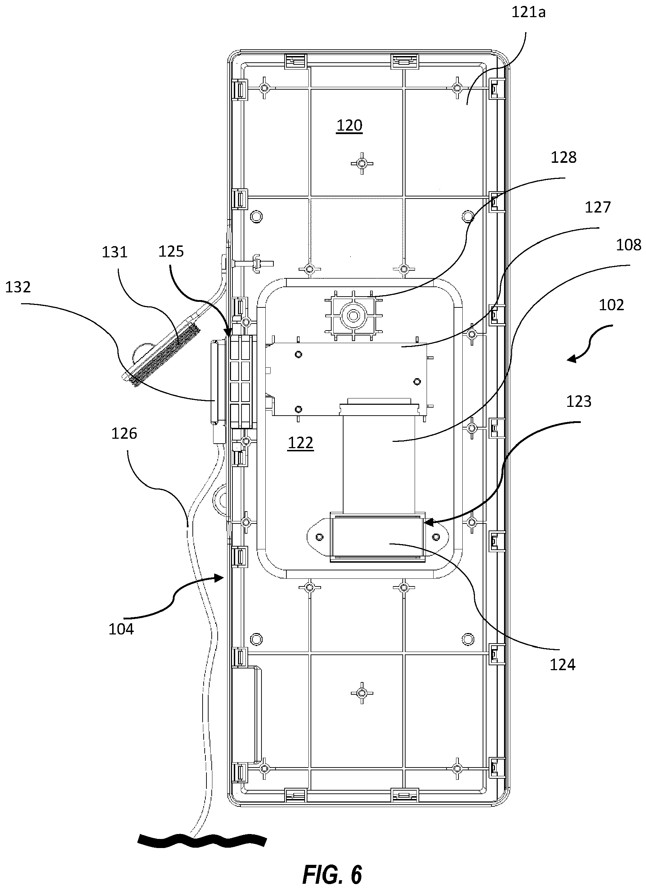

Referring initially to FIGS. 1-5, a computing system 100 according to the present disclosure is now described. The computing system **100** illustratively includes a computing device **101** (e.g., a personal computing device, a desktop computing device, or a laptop computing device), and a waterproof keyboard **102** coupled thereto. In the illustrated embodiment, the waterproof keyboard **102** comprises a full qwerty keyboard and an integrated number pad. It should be appreciated that this is merely exemplary, and the teachings herein may be applied to separate number pad keyboards and other keyboard configurations (e.g., compact qwerty keyboards without the number pad). The computing device **101** is associated with a user **103,** and the user may operate the waterproof keyboard **102** to provide input to the computing device. The waterproof keyboard **102** comprises a housing **104** comprising a plurality of keyboard buttons **105a-105n.** The housing **104** may comprise a durable polymer plastic, for example, acrylonitrile butadiene styrene, or a combination of plastic and metallic materials. As perhaps best seen in FIG. 6, the housing **104** comprises first and second housing segments **121a-121b,** which are coupled together via a plurality of fasteners (e.g., the illustrated threaded screws).

The waterproof keyboard **102** comprises a flexible keyboard circuit **106** carried within the housing **104.** The flexible keyboard circuit **106** comprises a first polymer layer **107,** a plurality of switches **110a-110n** aligned with the plurality of keyboard buttons **105a-105n** and over the first polymer layer, a second polymer layer **111** over the first polymer layer and the plurality of keyboard buttons, and an adhesive layer **112** (e.g., double sided tape, such as an adhesive transfer tape or a pressure-sensitive acrylic adhesive) between the first polymer layer and the second polymer layer. Any adhesive material can be used for the adhesive layer **112** so long as it has chemical resistance to cleaner liquids (e.g., healthcare industry disinfectants). As will be appreciated, the flexible keyboard circuit **106** comprises at least one electrically conductive material layer **113** on the first and second polymer layers **107, 111** to define the plurality of switches **110a-110n** and the connections therebetween. Further, the flexible keyboard circuit **106** illustratively comprises a ribbon connector **108** coupled to the plurality of switches **110a-110n** and to be coupled to a keyboard controller of the computing device **101.**

In particular, each of the first polymer layer **107** and the second polymer layer **111** may comprise biaxially-oriented polyethylene terephthalate (e.g., Mylar). The adhesive layer **112** may comprise an adhesive tape layer. When selecting the adhesive material for the adhesive layer **112,** the acrylic based adhesive may be helpful because acrylic based adhesives are resistant to cleaning chemicals used in healthcare industry. Other adhesive types may break down under exposure to certain chemicals used in cleaning agents. In contrast, the adhesive layer **112** uses acrylic based adhesive while existing keyboard flex circuit membranes are manufactured with typical adhesives (not resistant to these chemicals), such as OMAS glue, epoxy-based glue, and UV curable adhesives.

Another aspect is directed to a method for making a waterproof keyboard **102.** The method comprises providing a housing **104** comprising a plurality of keyboard buttons **105a-105n,** and forming a flexible keyboard circuit **106** to be carried within the housing. The flexible keyboard circuit **106** comprises a first polymer layer **107,** a plurality of switches **110a-110n** aligned with the plurality of keyboard buttons and over the first polymer layer, a second polymer layer **111** over the first polymer layer and the plurality of keyboard buttons **105a-105n,** and an adhesive layer **112** between the first polymer layer and the second polymer layer.

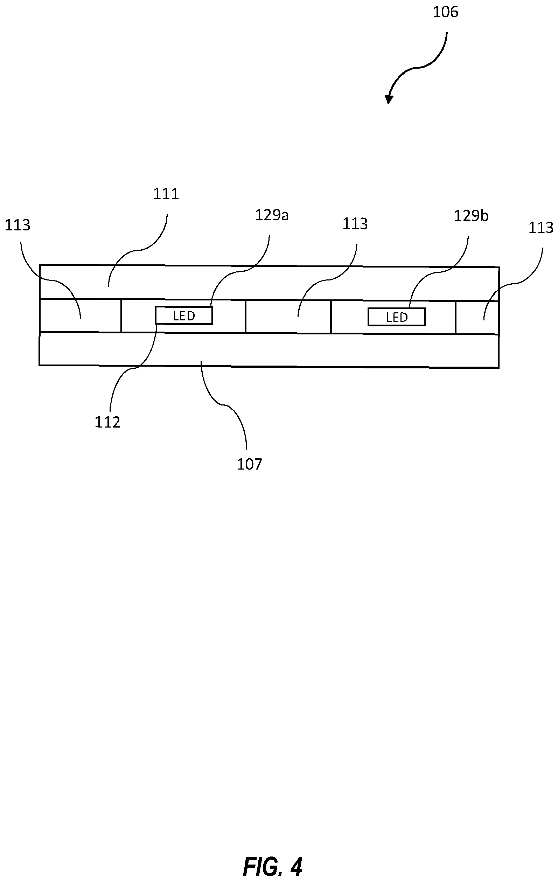

As perhaps best seen FIGS. 4-5, each keyboard button **105a-105n** is aligned with a respective switch **110a-110n** from the flexible keyboard circuit **106.** The first and second polymer layers **107, 111** defines a plurality of openings over respective switch circuitry in the at least one electrically conductive material layer **113.** The switch **110a-110n** comprises a dome shaped body **114** extending from a respective opening in the first and second polymer layers **107, 111.** The dome shaped body **114** comprises an electrically conductive switch contact configured to complete the respective switch circuitry in the at least one electrically conductive material layer **113** when the dome shaped body **114** is depressed into the flexible keyboard circuit **106.**

In some embodiments, the dome shaped body **114** comprises a rubber material (e.g., silicone), but may comprise any flexible and memoryless/resilient material. As will be appreciated, the dome shaped body **114** needs to spring back to the extended position after the completion of the keystroke. Also, the respective switch **110a-110n** comprises an adhesive layer between the dome shaped body **114** and the first polymer layer **107.**

The respective switch **110a-110n** illustratively comprises first and second plunger members **115-116** coupled between the keyboard button **105a-105n** and opposite portions of the housing **104.** As will be appreciated, the first and second plunger members **115-116** bias the keyboard button **105a-105n** upward and away from the dome shaped body **114.**

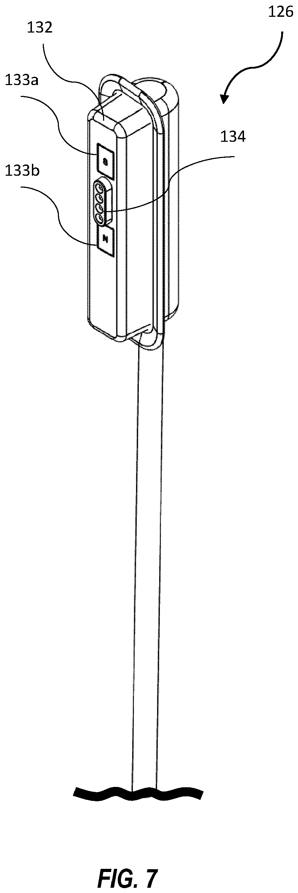

Referring now additionally to FIGS. 6-7, the housing **104** illustratively includes a first cavity **120** within and receiving the flexible keyboard circuit **106.** The first and second housing segments **121a-121b** may define a second cavity **122** within the first cavity **120.** The second cavity **122** is hermetically sealed from the first cavity **120,** and receives the ribbon connector **108** through a sealed ingress port **123.** The sealed ingress port **123** illustratively includes an encapsulant material adjacent the ribbon connector **108,** and an arm **124** (e.g., a clamp) configured to compress the encapsulant material around the ribbon connector. In existing approaches, the ingress may be sealed with a rubber gasket, which may not be effective due to the flat thin shape of the ribbon connector **108.**

Helpfully, in some embodiments, the encapsulant material may comprise a double-sided acrylic adhesive with a silicone carrier to provide good sealing effect at the ribbon connector **108** insertion port into the first housing segment **121a** (i.e., the top cover). The problem faced at the ribbon cable insertion port of the first housing segment **121a** is to maintain a good sealing between the ribbon connector **108** and plastic housing. The acrylic adhesive with a silicone carrier may provide good compression and viscosity characteristics to seal around the ribbon connector **108** and around the insertion port/cavity of the plastic housing. The arm **124** applied compression force required to endure the sealing effect of acrylic adhesive.

The housing **104** illustratively includes an external connector port **125** coupled to the ribbon connector **108** and accessible from an exterior of the housing **104.** The waterproof keyboard **102** illustratively comprises a connection wire **126** coupled between the computing device **101** and the external connector port **125.** In the illustrative embodiment, the connection wire **126** is magnetically coupled to the external connector port **125** via a magnetic connector plug **132.** The magnetic connector plug **132** illustratively comprises first and second magnets **133a-133b,** and connectors **134** therebetween.

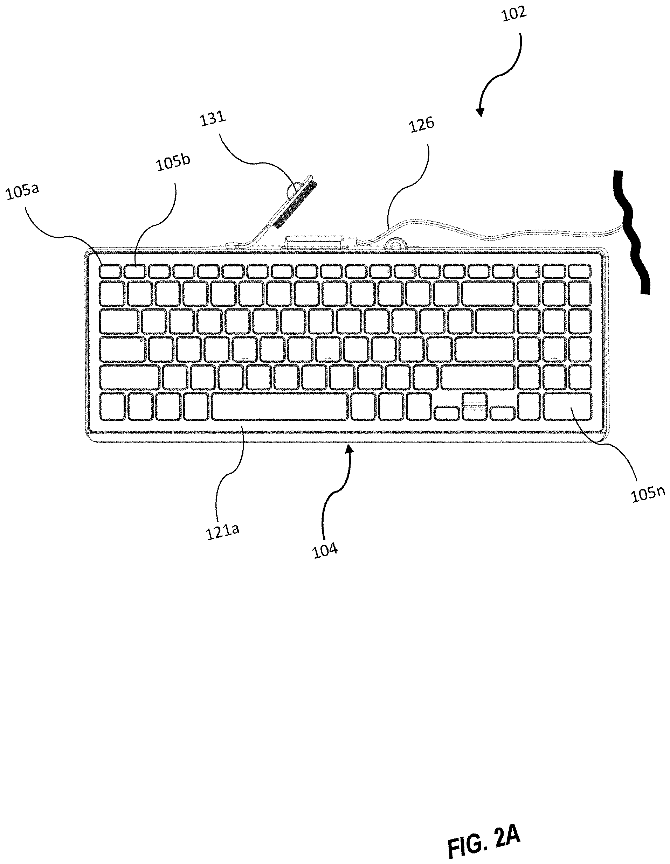

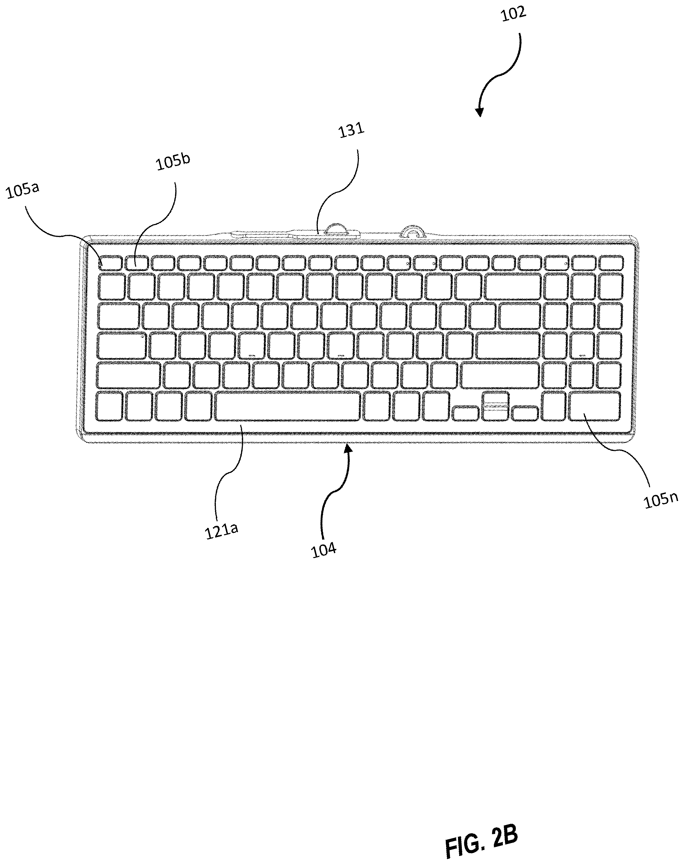

The external connector port **125** illustratively includes a skirt **131** comprising a flexible material, for example, silicone material. As shown in FIG. 2B, the connection wire **126** may be removed, exposing a port cavity of the connector port **125.** The skirt **131** is then fitted over the port cavity to seal it; this permits the entire waterproof keyboard **102** to be immersed in a liquid for cleaning.

Once the magnetic connector plug **132** is inserted into the connector port **125,** the skirt **131** of the external connector port seats on to the housing **104** around the cavity of the external connector port **125** (i.e., sealing the magnetic connector plug **132** from the external environment). The skirt **131** of the external connector port **125** ensures that there is no gap or opening to the port cavity of the waterproof keyboard **102** when the connection wire **126** is plugged in.

With the skirt **131** around the external connector port 125, this may provide a solution to an issue in existing waterproof keyboards with removable connection wires. In particular, the cleaning and sanitizing of keyboards while the keyboard is still deployed in workstation (e.g., while at medical carts) has become a common practice in the healthcare industry. When the cleaning and sanitization is done either by spraying or wiping the keyboard, the keyboard connection wire and connection port of the keyboard are exposed to cleaning agents, which may damage the keyboard and connection wire (e.g., causing open shorts). The skirt **131** of the external connector port **125** used in the waterproof keyboard **102** can seal off the port of the keyboard from any liquid ingress while the connection wire **126** is plugged in. This allows end-users in healthcare industry to clean the waterproof keyboard **102** while the keyboard is still deployed in the workstation without having to disconnect from the connection wire **126.**

The waterproof keyboard **102** illustratively comprises a controller **127** coupled between the ribbon connector **108,** and the external connector port **125.** In some embodiments, the flexible keyboard circuit **106** comprises a plurality of visual indicators (e.g., LEDs) carried by the first and second polymer layers **107, 111** and being coupled to the at least one electrically conductive material layer **113.** The controller **127** may be configured to control the plurality of visual indicators. The plurality of visual indicators may comprise a CAPS/NUM lock indicator, a service/clean visual indicator, and one or more keyboard backlight visual indicators. In some embodiments, the controller **127** may be configured to monitor a time between sanitation of the waterproof keyboard **102,** and may activate a service/clean visual indicator when a cleaning timer expires. In these embodiments, the controller **127** is configured to reset the cleaning timer automatically, based upon a preset combination of keystrokes, or based upon a moisture sensor.

In some embodiments, the plurality of visual indicators comprises LEDs **129a-129b,** and the LEDs may be carried between the first and second polymer layers **107, 111.** In other embodiments, the LEDs **129a-129b** may be adhesively bonded to an upper surface of the second polymer layer **111.**

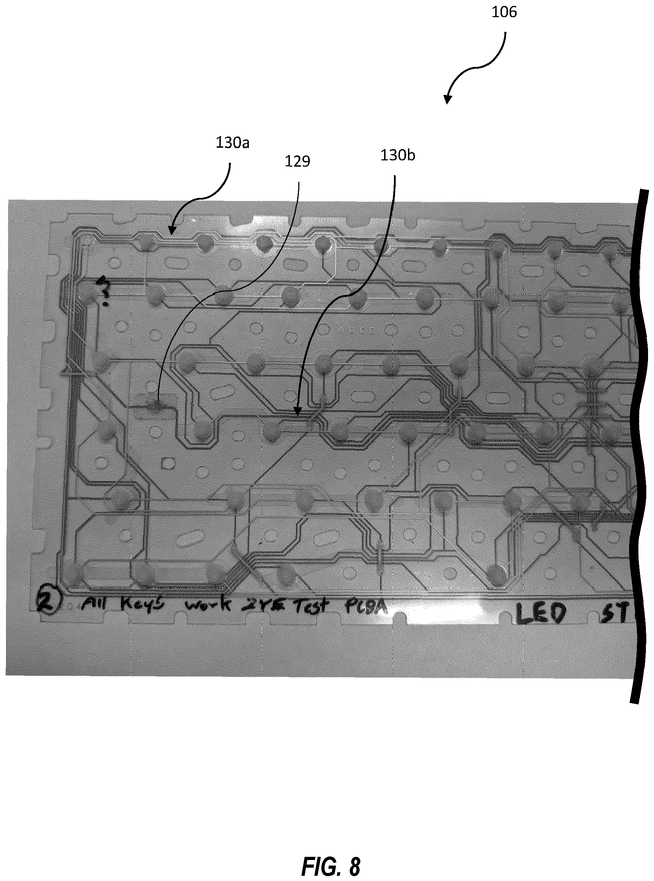

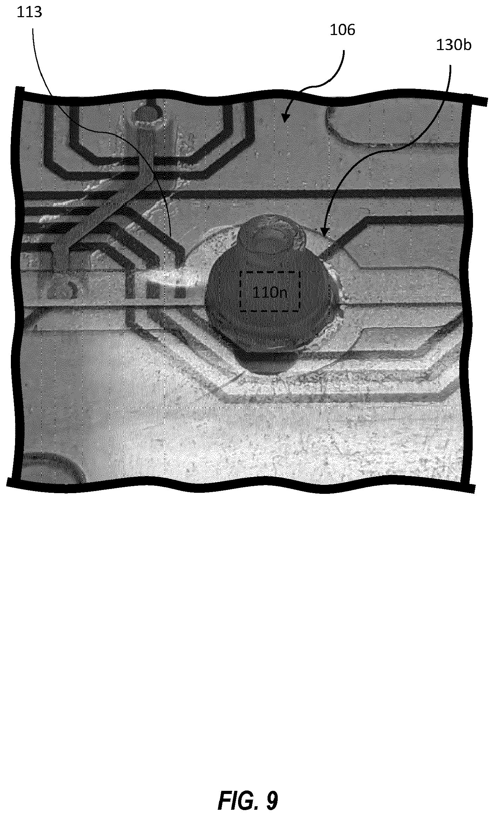

Referring now additionally to FIGS. 8-9, the flexible keyboard circuit **106** is now described. The first and second polymer layers **107, 111** define a plurality of sealed subsets **130a-130b** of the plurality of switches **110a-110n.** Each of the plurality of sealed subsets **130a-130b** is hermetically sealed to be fully waterproof. The plurality of sealed subsets **130a-130b** defines internal sealed air chambers between the first and second polymer layers **107, 111.** In other words, in contrast to the existing approaches, there are no external vents. Also, adjacent internal sealed air chambers may be fluidly coupled together so permit air movement from keystrokes. This may maintain pressure equilibrium within the flexible keyboard circuit **106.** Here, the flexible keyboard circuit **106** illustratively includes a visual indicator **129** (e.g., LED).

Further, as perhaps best seen in FIG. 8, the majority of the flexible keyboard circuit **106** is sealed (i.e., approximately 95%) solid with the first and second polymer layers **107, 110** and the adhesive layer **112.** Indeed, the only open sections are plurality of sealed subsets **130a-130b** encompassing the plurality of switches **110a-110n.** This is in contrast to existing approaches that seal 150 or less of the membrane. Because of this, the flexible keyboard circuit **106** may be more resilient to caustic disinfectants. In other words, the first and second polymer layers **107, 110** (i.e., the top and bottom layers) are hermetically sealed except for key contacts and air chambers when applicable.

It should be appreciated that the depicted arrangement of the plurality of sealed subsets **130a-130b** is exemplary. Indeed, in some embodiments, each subset **130a-130b** may contain a single switch **110a-110n.**

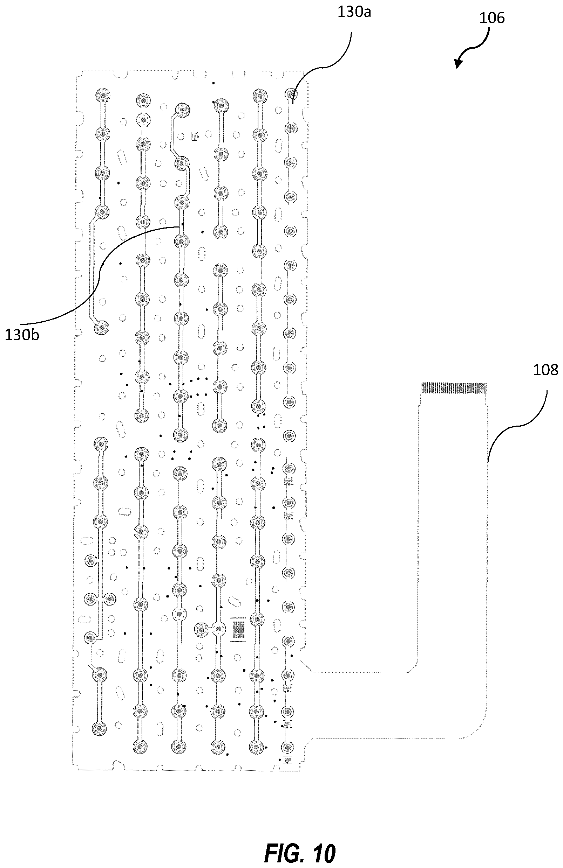

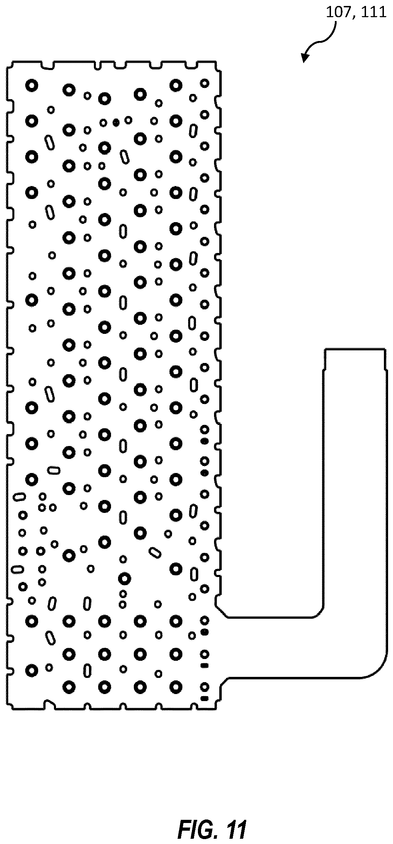

Referring now additionally to FIGS. 10-11, the individual layers of the flexible keyboard circuit **106** are now described. FIG. 10 shows all layers overlaid together. FIG. 11 shows the first and second polymer layers.

Advantageously, the waterproof keyboard **102** provides a fully hermetically sealed environment for the circuitry of the flexible keyboard circuit **106.** Because of this, the waterproof keyboard **102** may be exposed to liquids repeatedly without damage. In healthcare applications, this allows the waterproof keyboard **102** to be sanitized periodically. This is in contrast to existing waterproof keyboard approaches, which are reliant on vents within the membrane. In vented approaches, the waterproof nature of the keyboard is degraded over time. Moreover, since the adhesive layer **112** is protected by the first and second polymer layers **107, 111,** the abrasive cleaners used on the waterproof keyboard **102** will not degrade the waterproof nature of the keyboard.

Referring again to FIGS. 1-5, a waterproof keyboard **102** (e.g., non-vented waterproof keyboard) illustratively includes a housing **104** having a plurality of keyboard buttons **105a-105n,** and a flexible keyboard circuit **106** carried within the housing. The flexible keyboard circuit **106** includes a first polymer layer **107,** and an electrically conductive material layer **113** on the first polymer layer to define a plurality of switches **110a-110n** and connections therebetween. The plurality of switches **110a-110n** is aligned with the plurality of keyboard buttons **105a-105n.** The flexible keyboard circuit **106** also includes a second polymer layer **111** over the first polymer layer **107** and the electrically conductive material layer **113,** and an adhesive layer **112** between the first polymer layer and the second polymer layer and defining a plurality of sealed air chambers **130a-130b.** Subsets of the plurality of switches **110a-110n** are respectively within the plurality of sealed air chambers **130a-130b.** The waterproof keyboard **102** also includes a controller **127** carried within the housing **104** and coupled to the flexible keyboard circuit **106.**

As perhaps best seen in FIG. 4, the flexible keyboard circuit **106** illustratively comprises a plurality of visual indicators **129a-129b** (e.g., LEDs) carried by the first and second polymer layers **107, 111** and being coupled to the electrically conductive material layer **113.** The controller **127** is configured to activate one or more of the visual indicators **129a-129b** once a set time period has expired (i.e., providing a cleaning cycle reminder).

Also, the housing **104** illustratively includes a first internal cavity **120** receiving the flexible keyboard circuit **106,** and a second internal cavity **122** within the first internal cavity. The controller **127** is carried within the second internal cavity **122.** The second internal cavity **122** is sealed (e.g., hermetically) from the first internal cavity **120.**

As perhaps best seen in FIG. 6, the flexible keyboard circuit **106** illustratively includes a connector strip **108** extending from the first internal cavity **120** to the second internal cavity **122** and coupled to the controller **127.** In the illustrated embodiment, the housing **104** includes an external connector port **125** coupled to the controller **127.** The waterproof keyboard **102** includes a connection wire **126** coupled between a computing device **101** and the external connector port **125.** In other embodiments, the external connector port **125** and the connection wire **126** may be omitted for a wireless connection with the computing device **101.** In these embodiments, the first housing segment **121a** defines a mounting block **128** (FIG. 6) for a wireless module.

Another aspect is directed to a method of making a waterproof keyboard **102.** The method includes providing a housing **104** including a plurality of keyboard buttons **105a-105n,** forming a flexible keyboard circuit **106,** and positioning the flexible keyboard circuit within the housing. The flexible keyboard circuit **106** includes a first polymer layer **107,** and an electrically conductive material layer **113** on the first polymer layer to define a plurality of switches **110a-110n** and connections therebetween. The plurality of switches **110a-110n** is aligned with the plurality of keyboard buttons **105a-105n.** The flexible keyboard circuit **106** also includes a second polymer layer **111** over the first polymer layer **107** and the electrically conductive material layer **113,** and an adhesive layer **112** between the first polymer layer and the second polymer layer and defining a plurality of sealed air chambers. Subsets of the plurality of switches **110a-110n** are respectively within the plurality of sealed air chambers **130a-130b.** The method comprises coupling a controller **127** within the housing **104** and to the flexible keyboard circuit **106.**

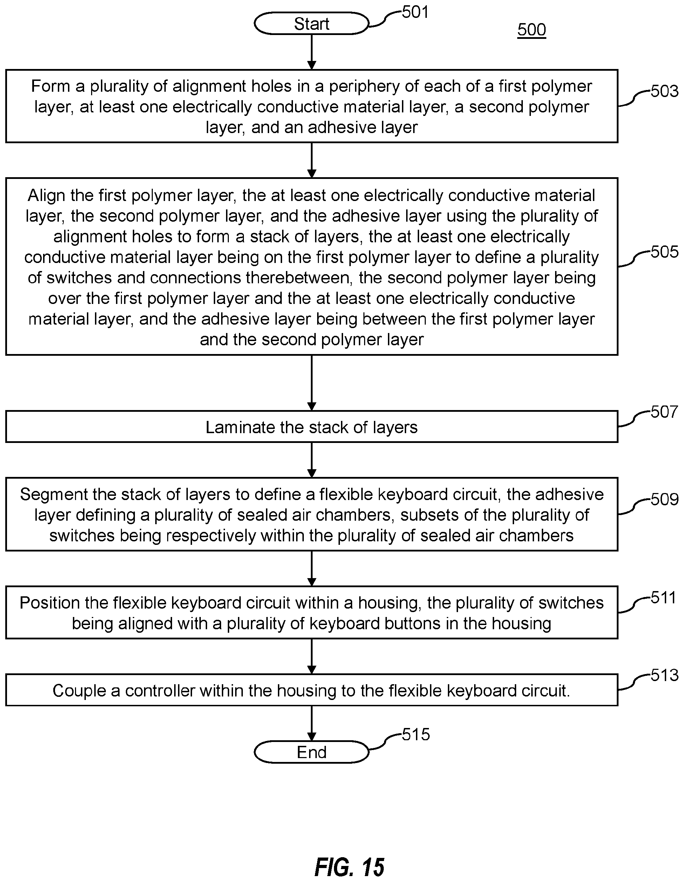

Referring now to FIG. 15, a method of making a waterproof keyboard **102** is now described with reference to a flowchart **500,** which begins at Block **501.** The method includes forming a plurality of alignment holes in a periphery of each of a first polymer layer **107,** an electrically conductive material layer **113,** a second polymer layer **111,** and an adhesive layer **112.** (Block **503**). The method illustratively includes aligning the first polymer layer **107,** the electrically conductive material layer **113,** the second polymer layer **111,** and the adhesive layer **112** using the plurality of alignment holes to form a stack of layers. (Block **505**). The electrically conductive material layer **113** is on the first polymer layer **107** to define a plurality of switches **110a-110n** and connections therebetween, and the second polymer layer **111** is over the first polymer layer and the electrically conductive material layer. The adhesive layer **112** is between the first polymer layer **107** and the second polymer layer **111.** The method further includes laminating the stack of layers, and segmenting the stack of layers to define a flexible keyboard circuit **106.** (Blocks **507, 509**). The adhesive layer **112** defines a plurality of sealed air chambers **130a-130b,** and subsets of the plurality of switches **110a-1110n** are respectively within the plurality of sealed air chambers. The method comprises positioning the flexible keyboard circuit **106** within a housing **104,** the plurality of switches **110a-110n** being aligned with a plurality of keyboard buttons **105a-105n** in the housing, (Block **511**) and coupling a controller **127** within the housing to the flexible keyboard circuit. (Blocks **513**). The method ends at Block **515.**

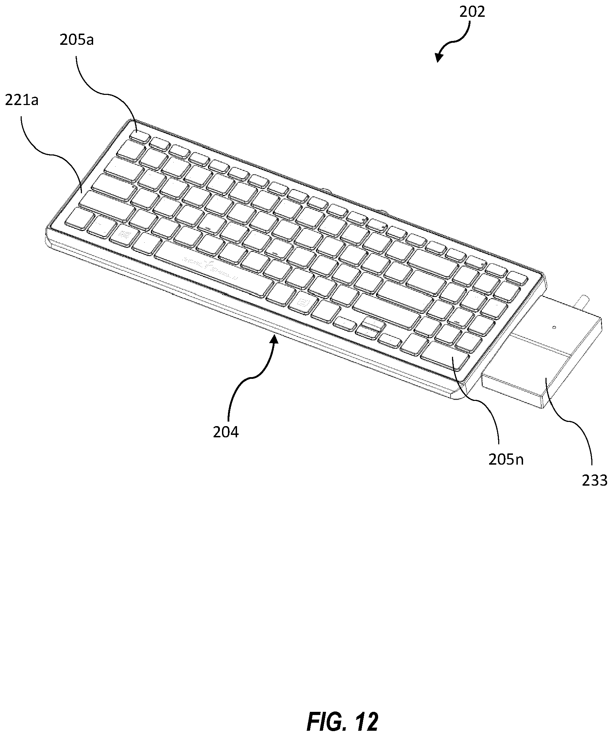

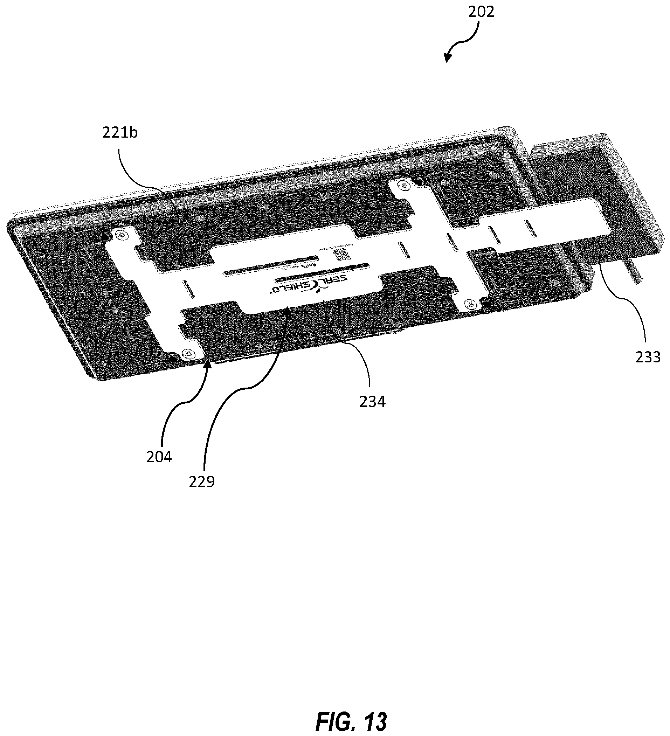

Referring now additionally to FIGS. 12-14, another embodiment of the waterproof keyboard **202** is now described. In this embodiment of the waterproof keyboard **202,** those elements already discussed above with respect to FIGS. 1-11 are incremented by 100 and most require no further discussion herein. This embodiment differs from the previous embodiment in that this waterproof keyboard **202** illustratively includes a peripheral assembly **229.** The peripheral assembly **229** illustratively comprises a peripheral **233,** and a mounting arm **234** coupled between the peripheral and the second housing segment **221b.** The peripheral **233** may comprise an authentication device, such as a unique token reader or a biometric scanner device, or a user input device, such as a mouse, for example.

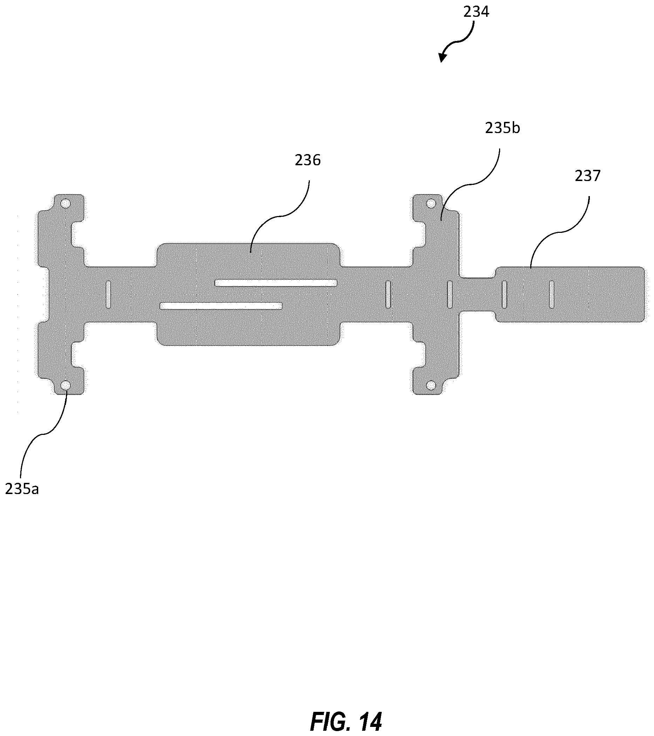

As perhaps best seen in FIG. 14, the mounting arm **234** illustratively includes first and second legs **236a-236b** respectively defining a plurality of fastener receiving passageways. As will be appreciated, the plurality of fastener receiving passageways may be arranged in standard mounting format, such as the VESA Mounting Interface Standard, for example. The mounting arm **234** illustratively comprises a medial portion **236** extending between the first and second legs **236a-236b** and defining a plurality of longitudinal slots for providing mounting flexibility, and a peripheral arm **237** extending laterally and to be coupled to the peripheral **233.**

Many modifications and other embodiments of the present disclosure will come to the mind of one skilled in the art having the benefit of the teachings presented in the foregoing descriptions and the associated drawings. Therefore, it is understood that the present disclosure is not to be limited to the specific embodiments disclosed, and that modifications and embodiments are intended to be included within the scope of the appended claims.

## Claims

1. A waterproof keyboard comprising:
a housing comprising a plurality of keyboard buttons;
a flexible keyboard circuit carried within the housing and comprising,
a first polymer layer,
at least one electrically conductive material layer on the first polymer layer to define a plurality of switches and connections therebetween, the plurality of switches being aligned with the plurality of keyboard buttons,
a second polymer layer over the first polymer layer and the at least one electrically conductive material layer, and
an adhesive layer between the first polymer layer and the second polymer layer and defining a plurality of sealed air chambers, subsets of the plurality of switches being respectively within the plurality of sealed air chambers; and
a controller to be coupled to the flexible keyboard circuit.

2. The waterproof keyboard of claim 1 wherein the flexible keyboard circuit comprises a plurality of visual indicators carried by the first and second polymer layers and being coupled to the at least one electrically conductive material layer.

3. The waterproof keyboard of claim 2 wherein the controller is configured to activate at least one visual indicator once a set time period has expired.

4. The waterproof keyboard of claim 1 wherein the housing comprises a first internal cavity receiving the flexible keyboard circuit, and a second internal cavity within the first internal cavity.

5. The waterproof keyboard of claim 4 wherein the controller is carried within the second internal cavity.

6. The waterproof keyboard of claim 4 wherein the second internal cavity is sealed from the first internal cavity.

7. The waterproof keyboard of claim 4 wherein the flexible keyboard circuit comprises a connector strip extending from the first internal cavity to the second internal cavity and coupled to the controller.

8. The waterproof keyboard of claim 7 wherein the housing comprises an external connector port coupled to the controller; and further comprising a connection wire coupled between a computing device and the external connector port.

9. The waterproof keyboard of claim 1 wherein each of the first polymer layer and the second polymer layer comprises biaxially-oriented polyethylene terephthalate; and wherein the adhesive layer comprises an adhesive tape layer.

10. A method of making a waterproof keyboard, the method comprising:
forming a plurality of alignment holes in a periphery of each of a first polymer layer, at least one electrically conductive material layer, a second polymer layer, and an adhesive layer;
aligning the first polymer layer, the at least one electrically conductive material layer, the second polymer layer, and the adhesive layer using the plurality of alignment holes to form a stack of layers, the at least one electrically conductive material layer being on the first polymer layer to define a plurality of switches and connections therebetween, the second polymer layer being over the first polymer layer and the at least one electrically conductive material layer, and the adhesive layer being between the first polymer layer and the second polymer layer;
laminating the stack of layers;
segmenting the stack of layers to define a flexible keyboard circuit, the adhesive layer defining a plurality of sealed air chambers, subsets of the plurality of switches being respectively within the plurality of sealed air chambers;
positioning the flexible keyboard circuit within a housing, the plurality of switches being aligned with a plurality of keyboard buttons in the housing; and
coupling a controller within the housing to the flexible keyboard circuit.

11. The method of claim 10 wherein the laminating comprises a cold lamination.

12. The method of claim 10 wherein the segmenting comprises a die cutting process.

13. The method of claim 10 wherein the forming comprises positioning a plurality of visual indicators carried by the first and second polymer layers and being coupled to the at least one electrically conductive material layer.

14. The method of claim 10 wherein the housing comprises a first internal cavity receiving the flexible keyboard circuit, and a second internal cavity within the first internal cavity.
